(19) Europäisches Patentamt
European Patent Office
Office européen des brevets

(11) **EP 3 354 671 A1**

(12) **EUROPÄISCHE PATENTANMELDUNG**

(43) Veröffentlichungstag:
01.08.2018 Patentblatt 2018/31

(51) Int Cl.:
*C08G 18/76* (2006.01)      *B29C 44/32* (2006.01)
*B29C 44/46* (2006.01)      *C08G 18/18* (2006.01)
*C08G 18/22* (2006.01)      *C08G 18/42* (2006.01)

(21) Anmeldenummer: 17154063.6

(22) Anmeldetag: **31.01.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYURETHAN (PUR) UND POLYURETHAN/POLYISOCYANURAT (PUR/PIR)- HARTSCHAUMSTOFFEN**

(57) Die Erfindung betrifft ein Verfahren zur Herstellung von Polyurethan (PUR) und Polyurethan/Polyisocyanurat (PUR/PIR) - Hartschaumstoffen, umfassend die Schritte

i) Herstellen eines Reaktionsgemisches enthaltend die Komponenten

A) eine Isocyanat-reaktive Komponente enthaltend mindestens ein Polyol ausgewählt aus der Gruppe bestehend aus Polyetherpolyolen, Polyesterpolyolen, Polycarbonatpolyolen, Polyether-Polycarbonatpolyolen und Polyetheresterpolyolen,

B) eine Polyisocyanatkomponente und

C) ein Treibmittel

D) gegebenenfalls eine Katalysatorkomponente

E) gegebenenfalls Hilfs- und Zusatzstoffe,

ii) Auftragen des Reaktionsgemisches mit einer Anlage umfassend mindestens eine Gießvorrichtung, wobei die Gießvorrichtung (100) aufweist:

- einen Zulaufanschluss (12) zur Einspeisung des Reaktionsgemisches (10),

- wenigstens einen sich in einer Querrichtung (Q) erstreckenden Austrittsspalt (13) zum Austritt des Reaktionsgemisches (10),

- zwei sich gegenüberliegend angeordnete Spaltplatten (14), wobei sich in einer Höhenrichtung (H) über dem Austrittsspalt (13) ein Spaltraum (15) zwischen den Spaltplatten (14) erstreckt,

dadurch gekennzeichnet, dass

- ein mit dem Zulaufanschluss (12) verbundener Zulaufkanal (16) zwischen den Spaltplatten (14) ausgebildet ist, der den Spaltraum (15) über dem Austrittsspalt (13) in Höhenrichtung (H) abschließt, wobei

- der Zulaufkanal (16) einen Kanalquerschnitt (17) aufweist, dessen Hauptabmaß größer ist als die Breite (B) des Spaltraumes (15), sodass

- das Reaktionsgemisch über der Länge des Zulaufkanals (16) verteilt in den Spaltraum (15) einleitbar ist.

**Beschreibung**

Die Erfindung betrifft ein Verfahren zur Herstellung von Polyurethan (PUR) und Polyurethan/Polyisocyanurat (PUR/PIR) - Hartschaumstoffen, umfassend die Schritte

   i) Herstellen eines Reaktionsgemisches enthaltend die Komponenten

      A) eine Isocyanat-reaktive Komponente enthaltend mindestens ein Polyol ausgewählt aus der Gruppe bestehend aus Polyetherpolyolen, Polyesterpolyolen, Polycarbonatpolyolen, Polyether-Polycarbonatpolyolen und Polyetheresterpolyolen,
      B) eine Polyisocyanatkomponente und
      C) ein Treibmittel
      D) gegebenenfalls eine Katalysatorkomponente
      E) gegebenenfalls Hilfs- und Zusatzstoffe,

   ii) Auftragen des Reaktionsgemisches mittels einer Gießvorrichtung , wobei die Gießvorrichtung einen Zulaufanschluss zur Einspeisung des Reaktionsgemisches aufweist und einen sich in einer Querrichtung erstreckenden Austrittsspalt zum Austritt des Reaktionsgemisches bildet, und wobei die Gießvorrichtung zwei sich gegenüberliegend angeordnete Spaltplatten aufweist, wobei sich in einer Höhenrichtung über dem Austrittsspalt ein Spaltraum zwischen den Spaltplatten erstreckt.

Die EP 2 216 156 A1 offenbart ein kontinuierliches Verfahren zur Herstellung von Verbundelementen, umfassend eine untere Deckschicht, einen Schaumkern und eine obere Deckschicht, wobei eine schäumbare Reaktionsmischung mittels einer mehrere Austragsleitungen umfassende Gießvorrichtung aufgetragen wird.

Die Qualität der Sandwich-Elemente hängt wesentlich davon ab, wie gleichmäßig und volumenfüllend der Polyurethanschaumkern zwischen den beiden Deckschichten ausgebildet ist. Auch spielt die Haftung der Deckschichten auf der Grenzfläche des Polyurethanschaumkernes eine wesentliche Rolle zur Beurteilung der Qualität des Verbundelementes. Werden mehrere Stränge an Reaktionsgemisch in Breitenrichtung der Deckschicht nebeneinander auf die Innenseite der Deckschicht aufgetragen, so führt das Aufschäumen des Reaktionsgemisches zu mehreren Schaumfronten, die seitlich aneinander gelangen und zwischen denen sich folglich Grenzflächen bilden. Die Folge ist eine ungleichmäßige Aufschäumung des Reaktionsgemisches mit mehreren Schaumfronten und im ausgehärteten Zustand weist der Polyurethanschaumkern eine inhomogene Textur auf. Es bilden sich dabei Überwälzungen mit Blasen und Lunkern, wobei die Zellorientierung des Schaumes in der Regel auch nicht gleichmäßig ist. Dadurch sinkt die Qualität der Schaumstruktur, und eine zu geringe Haftung an der Innenseite der Deckschichten kann die Folge sein und es kann zu einer verminderten Qualität der Verbundelemente kommen, insbesondere hinsichtlich der mechanischen und/oder thermischen Eigenschaften, der Oberflächenqualität und/oder der Druckfestigkeit.

EP 0 683 027 A offenbart ein Verfahren zum Auftrag von geschmolzenen oder flüssigen Polymerschaum mittels einer Breitschlitzdüse, wobei das Polymer zunächst mit Gas vermischt wird, das Durchströmen des Verteilerbereiches (68) oberhalb eines kritischen Druckes erfolgt und danach eine Druckerniedrigung zur Expansion des Gases und somit zum Aufschäumen des Polymeren führt. Ein Verfahren zum Auftrag eines reaktiven Gemisches, bei dem während der Reaktion Gas gebildet wird, ist jedoch nicht offenbart. Die beschriebene Breitschlitzdüse ist auch nicht in vorteilhafter Weise für die Auftragung eines reaktiven Polyol-Polyisocyanat-Gemisches geeignet, da der offenbarte Verteilerkanal einen Rechteckquerschnitt mit konstanter Höhe (W) über der Länge des Austrittsspaltes der Gießvorrichtung besitzt. Die Dicke (H) des Verteilerkanals nimmt vom Zulaufanschluss nach außen stark ab. Das Verhältnis der Querschnittsfläche des Kanals zu dem Umfang - üblicherweise als hydraulischer Durchmesser gekennzeichnet - wird entsprechend immer kleiner, was aufgrund der Wandhaftung des reaktiven Gemisches und der abnehmenden Geschwindigkeit ein verstärktes Zuwachsen des Verteilerkanals am Kanalende bewirkt. Gemäß EP 0 683 027 A sind hinter dem Verteilerbereich (68) weitere Schlitzbereiche (71), (72) und (73) vorgesehen, die zu einem höheren Zeitbedarf zum Durchströmen der Gießvorrichtung führen, was insbesondere für reaktive Polyol-Polyisocyanat-Gemischen kritisch ist. Das in EP 0 683 027 A angegebene Kantenverhältnis von dem Rechteckquerschnitt führt darüber hinaus dazu, dass zum Durchströmen der Gießvorrichtung je nach Fließweg unterschiedliche Zeiten benötigt werden und somit das Aufschäumen des Reaktionsgemisches ungleichmäßig ist. Darüber hinaus kann die offenbarte Querschnittserweiterung im Schlitzbereich (71) zur Stagnation des Gemisches und infolgedessen zu verstärkten Zuwachsen infolge der fortschreitenden Reaktion des Gemisches führen.

Aus der GB 1 282 876 A ist eine Gießvorrichtung mit einer Breitschlitzdüse bekannt, die einen in Breitenrichtung der Deckschicht orientierten Linienauftrag eines Reaktionsgemisches umfassend Polyol und Isocyanat ermöglicht. Bei dieser Gießvorrichtung münden mehrere Zulaufanschlüsse punktförmig in einen zwischen den Spaltplatten ausgebildeten Spaltraum, der segmentweise die Form eines Dreiecks besitzt. Die dreieckförmige Geometrie des Spaltraumes dieser Gießvorrichtung erlaubt es jedoch nicht, dass jede Volumeneinheit des Reaktionsgemisches die Gießvorrichtung mit der gleichen Zeitdauer durchläuft, da das Reaktionsgemisch direkt unterhalb des Zulaufanschlusses eine kürzere Durchlaufzeit erreicht als in den Randbereichen des Spaltes. Durch die zwischen den Spaltplatten gebildete Dreieckform kann sich auch keine gleichmäßige Ausströmgeschwindigkeit des Reaktionsgemisches aus dem Austrittsspalt einstellen, da im Randbereich der dreieckförmigen Struktur der Spalträume infolge des längeren Fließweges ein höherer Druckabfall vorherrscht als in der Mitte. Dies führt zu einer über die Breite des Spaltes ungleichförmigen Austragsmenge entlang der unteren Grundkante jedes der dreieckförmigen Gießspalte sowie, als Folge, ein ungleichmäßiges Aufschäumen des Reaktionsgemisches entlang des Austrittsspaltes.

EP 2 208 599 A1 offenbart ein Verfahren zum Auftrag einer aufschäumenden Polyurethanreaktionsmischung enthaltend ein niedrig siedendes Gas mittels einer einen Düsenspalt aufweisenden Gießvorrichtung, durch welche insbesondere das Zuwachsen des Düsenspaltes während der Auftragung verhindert werden soll. Zur Lösung dieser Aufgabe schlägt EP 2 208 599 A1 ein Verfahren vor, bei dem der Spaltraum auf eine Temperatur unterhalb eines bestimmten Wertes (T1) gekühlt wird und so Ablagerungen durch regelmäßige Gasbildung entfernt werden. Weiterhin offenbart die EP 2 208 599 A1 unterschiedliche Spaltgeometrieen, insbesondere solche, bei denen die Breite des Spaltes und auch der Volumenstrom nach außen hin zu nehmen. Es wird jedoch keine Ausführungsform vorgeschlagen, bei der sich der Querschnitt des Zulaufkanals, der den Spaltraum über dem Austrittsspalt in Höhenrichtung abschließt, mit zunehmenden Abstand vom Zulaufanschluss nach außen hin verjüngt und somit so modifiziert ist, dass jede Volumeneinheit des Reaktionsgemisches die Gießvorrichtung mit der gleichen Zeitdauer durchläuft. Auf diese Weise kann ein Zuwachsen des Düsenspaltes von Anfang an reduziert werden. Aufgrund des längeren Fließweges vom Zulaufanschluss nach außen hin im Vergleich zur mittigen Position, ist darüber hinaus die Austragsmenge selbst bei einer konstanten Spaltgeometrie zum Rand hin geringer. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

Aufgabe der Erfindung ist es, ein Verfahren für die Herstellung von Polyurethan (PUR) und Polyurethan/Polyisocyanurat (PUR/PIR) - Hartschaumstoffen zur Verfügung zu stellen, mit dem ein gleichmäßiges Aufschäumen des Reaktionsgemisches aus Polyolkomponente, Polyisocyanatkomponente, Treibmittelkomponenten, ggf. Katalysatoren und weiteren Hilfs- und Zusatzstoffen über der Deckschichtbreite erzielt werden soll. Das Verfahren soll sich flexibel auch für den Einsatz von schnell reagierenden Reaktionssystemen nutzen lassen. Die hergestellten Hartschaumstoffe sollen über mindestens gleich gute Eigenschaften wie die mit konventionellen Verfahren (z.B. mittels Gießharke) hergestellten Hartschaumstoffe verfügen, bevorzugt über bessere Qualitäten, insbesondere im Hinblick auf Oberflächenqualität und Homogenität der Schäume.

Die genannte Aufgabe konnte dadurch gelöst werden, dass ein Verfahren zur Herstellung von Polyurethan (PUR) und Polyurethan/Polyisocyanurat (PUR/PIR) - Hartschaumstoffen, umfassend die Schritte

i) Herstellen eines Reaktionsgemisches enthaltend die Komponenten

A) eine Isocyanat-reaktive Komponente enthaltend mindestens ein Polyol ausgewählt aus der Gruppe bestehend aus Polyetherpolyolen, Polyesterpolyolen, Polycarbonatpolyolen, Polyether-Polycarbonatpolyolen und Polyetheresterpolyolen,
B) eine Polyisocyanatkomponente und
C) ein Treibmittel
D) gegebenenfalls eine Katalysatorkomponente
E) gegebenenfalls Hilfs- und Zusatzstoffe,

ii) Auftragen des Reaktionsgemisches mit einer Anlage umfassend mindestens eine Gießvorrichtung, wobei die Gießvorrichtung einen Zulaufanschluss zur Einspeisung des Reaktionsgemisches aufweist und einen sich in einer Querrichtung erstreckenden Austrittsspalt zum Austritt des Reaktionsgemisches bildet, und wobei die Gießvorrichtung zwei sich gegenüberliegend angeordnete Spaltplatten aufweist, wobei sich in einer Höhenrichtung über dem Austrittsspalt ein Spaltraum zwischen den Spaltplatten erstreckt, zur Verfügung gestellt wird.

Insbesondere handelt es sich um ein kontinuierliches Verfahren.

Die Isocyanat-reaktive Komponente A) enthält mindestens eine Basis-Polyolkomponente ausgewählt aus der Gruppe bestehend aus Polyetherpolyolen, Polyesterpolyolen, Polyetheresterpolyolen, Polycarbonatpolyolen und/oder Polyether-Polycarbonatpolyolen.

Diese Basis-Polyolkomponente besitzt bevorzugt Funktionalitäten von ≥1,2 bis ≤ 3,5, insbesondere ≥1,6 bis ≤ 2,4 und weist eine Hydroxylzahl zwischen 100 bis 300 mg KOH/g, bevorzugt 150 bis 270 mg KOH/g und insbesondere bevorzugt 160 - 260 mg KOH/g auf. Vorzugsweise besitzt die Basis-Polyolkomponente mehr als 70 mol%, bevorzugt mehr als 80 mol%, insbesondere mehr als 90 mol% primäre OH-Gruppen.

Der Anteil an Basis-Polyolkomponente beträgt, bezogen auf das Gesamtgewicht aus der Isocyanat-reaktiven Komponente A), der Katalysatorkomponente D) und den Hilfs- und Zusatzstoffen E), mindestens 50 Gew-% und bevorzugt 65 Gew.-%.

Die zahlengemittelte Molmasse $M_n$ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Im Sinne dieser Anmeldung kann es sich bei "einem Polyetherpolyol" auch um eine Mischung unterschiedlicher Polyetherpolyole handeln, wobei in diesem Fall die Mischung der Polyetherpolyole als gesamtes die genannte OH-Zahl aufweist. Analog gilt dies für die weiteren hier aufgeführten Polyole und ihre Kennzahlen.

Neben den oben beschriebenen Polyolen der Basis-Polyolkomponente können in der Isocyanat-reaktiven Komponente A) auch weitere Isocyanat-reaktive Komponenten zum Einsatz kommen:

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen mit dem erfindungsgemäßen Verfahren können diese die kontinuierliche Produktion von Elementen mit flexiblen oder starren Deckschichten ermöglichen.

Diese langkettigen Polyole weisen Funktionalitäten von ≥1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und besitzen eine Hydroxylzahl zwischen 10 und 100 mg KOH/g.

Der Zusatz von mittelkettigen Polyolen, insbesondere Polyetherpolyolen, und niedermolekularen isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥2 bis ≤ 6 auf und besitzen eine Hydroxylzahl zwischen 300 und 700 mg KOH/g.

Bei den erfindungsgemäß als Basis-Polyol eingesetzten Polyethern oder als zusätzlich in der Komponente A) enthaltenen lang- oder mittelkettigen verwendbaren Polyetherpolyolen handelt es sich um die dem Fachmann bekannten, in der Polyurethansynthese einsetzbaren Polyetherpolyole mit den genannten Merkmalen.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Die Polyesterpolyole der Basis-Polyolkomponente weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq 4$ bis $\leq 6$ Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq 1$ bis $\leq 4$ Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise $\geq 18$ g/mol bis $\leq 400$ g/mol, bevorzugt von $\geq 62$ g/mol bis $\leq 200$ g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S. 55 ff. (Kap. 4: Oligo-Polyols for Elastic Polyurethanes), S. 263 ff. (Kap. 8: Polyester Polyols for Elastic Polyurethanes) und insbesondere auf S. 321 ff. (Kap. 13: Polyether Polyols for Rigid Polyurethane Foams) und S. 419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Weiterhin können in der Isocyanat-reaktiven Komponente A) niedermolekulare isocyanat-reaktive Verbindungen enthalten sein, insbesondere di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol, Glycerin. Polyolverbindungen, welche unter die Definition der mittelkettigen Polyolverbindungen fallen, sind von der Gruppe der niedermolekularen isocyanat-reaktiven Verbindungen ausgenommen. Sofern zur Herstellung der Polyurethanhartschaumstoffe solche niedermolekularen isocyanat-reaktiven Verbindungen Anwendung finden, z.B. in der Funktion als Kettenverlängerungsmittel und/oder Vernetzungsmittel, kommen diese zweckmäßigerweise in einer Menge von bis zu 5 Gew.-%, bezogen auf das Gesamtgewicht der Komponente A) zum Einsatz.

Neben den oben beschriebenen Polyolen und isocyanat-reaktiven Verbindungen können in der Komponente A) weitere isocyanat-reaktive Verbindung enthalten sein, insbesondere Polyamine, Polyaminoalkohole und Polythiole. Selbstverständlich umfassen die beschriebenen Isocyanat-reaktiven Komponenten auch solche Verbindungen mit gemischten Funktionalitäten.

Eine bevorzugte Isocyanat-reaktive Komponente A) für die mit diesem Verfahren hergestellten Schäume enthält 65 bis 100 Gew.-%, insbesondere 80 bis 100 Gew.-% der Basis-Polyolkomponente ausgewählt aus der Gruppe bestehend aus Polyesterpolyol, Polyetherpolyol, Polyetheresterpolyol, Polycarbonatpolyol und/oder Polyether-Polycarbonatpolyol in einem Hydroxylzahlbereich zwischen 100 bis 300 mg KOH/g und mit Funktionalitäten von ≥1,2 bis ≤ 3,5, 0 bis 25 Gew.-%, insbesondere 5 bis 15 Gew.-%, langkettige Polyetherpolyole mit einer Funktionalität von ≥1,2 bis ≤ 3,5 und einer Hydroxylzahl zwischen 10 und 100 mg KOH/g, und 0 bis 10 Gew.-%, insbesondere 0 bis 5 Gew.-%, niedermolekulare Isocyanat-reaktive Verbindungen mit einer Molmasse $M_n$ kleiner als 400 g/mol, und 0 bis 10 Gew.-%, insbesondere 0 bis 6 Gew.-%, mittelkettige Polyetherpolyole mit Funktionalitäten von ≥ 2 bis ≤ 6 und einer Hydroxylzahl zwischen 300 und 700 mg KOH/g. Diese Angaben in Gew.-% beziehen sich jeweils auf das Gesamtgewicht aus der Isocyanat-reaktiven Komponente A), der Katalysatorkomponente D) und den Hilfs- und Zusatzstoffen E).

In einer weiterhin bevorzugten Ausführungsform enthält die Isocyanat-reaktive Komponente A) mindestens ein Polyesterpolyol mit einer Funktionalität von Funktionalitäten von ≥1,2 bis ≤ 3,5, und einer Hydroxylzahl von Zahl von 100 bis 300 mg KOH/g, sowie einer Säurezahl von 0 bis 5,0 mg KOH/g in einer Menge von 65 - 100 Gew.-% bezogen auf das Gesamtgewicht der Isocyanat-reaktiven Komponente A; und ein Polyetherpolyol mit einer Funktionalität von ≥ 1,8 bis ≤ 3,5 und einer Hydroxylzahl von 10 bis 100 mg KOH/g, bevorzugt 20 bis 50 mg KOH/g in einer Menge von 0 bis 15 Gew.-%, bezogen auf das Gesamtgewicht aus der Isocyanat-reaktiven Komponente A), der Katalysatorkomponente D) und den Hilfs- und Zusatzstoffen E).

Das Reaktionsgemisch kann Hilfs- und Zusatzstoffe E) enthalten. Diese können ganz oder teilweise der Isocyanat-reaktiven Komponente A) zugegeben werden oder direkt der Mischung der Komponenten zudosiert werden.

Bevorzugt umfassen die Hilfs- und Zusatzstoffe E) Emulgatoren. Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7 Gew.-%, jeweils bezogen auf das Gesamtgewicht der Isocyanat-reaktiven Zusammensetzung. Bevorzugte Emulgatoren sind Polyetherpolysiloxancopolymerisate. Solche sind beispielsweise unter der Bezeichnung B84504 und B8443 der Firma Evonik, Niax L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können auch eingesetzt werden.

Weiterhin umfasst die Komponente E) alle Additive, die üblicherweise Isocyanat-reaktiven Zusammensetzungen zugesetzt werden. Beispiele für solche Additive sind Zellregulantien, Thixotropiermittel, Weichmacher und Farbstoffe.

Insbesondere können zur Verbesserung der Brandbeständigkeit den Isocyanat-reaktiven Zusammensetzungen zudem Flammschutzmittel zugesetzt werden. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris($\beta$-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.-%, bezogen auf das Gesamtgewicht der Isocyanat-reaktiven Zusammensetzung Isocyanat-reaktiven Komponente eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren.

Das erfindungsgemäße Verfahren eröffnet die Möglichkeit, dass feste Zusatzstoffe, z.B. feste Flammschutzmittel oder Füllstoffe, und / oder Zusatzstoffe, welche die Viskosität des Reaktionsgemisches bei Zugabe erhöhen, überhaupt oder in höheren Mengen als üblich zugesetzt werden können, und trotzdem homogene Schaumplatten mit guten Oberflächen hergestellt werden können, da ein Zusammenfließen von einzelnen Strängen des Reaktionsgemisches nicht nötig ist.

Die Komponente B) ist ein Polyisocyanat, also ein Isocyanat mit einer NCO-Funktionalität von $\geq 2$. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und sich durch folgende Summenformel beschreiben lassen: $C_{15}H_{10}N_2O_2[C_8H_5NO]_n$, wobei n = ganze Zahl > 0, bevorzugt n = 1, 2, 3 und 4, ist. Höherkernige Homologe $C_{15}H_{10}N_2O_2[C_8H_5NO]_m$, m = ganze Zahl $\geq 4$) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente B) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt. Da die Viskosität der Isocyanatkomponente mit steigender Funktionalität aber ansteigt, existieren beim konventionellen Auftrag von PUR und /oder PUR/PIR-Reaktionssystemen mittels Gießharke Grenzen, da die einzelnen Stränge des hochviskosen Reaktionssystems nach dem Auftrag nicht hinreichend zusammenlaufen. Das erfindungsgemäße Verfahren eröffnet die Möglichkeit, dass Isocyanate mit höheren Viskositäten als dem üblichen Bereich bis 1000 mPas verwendet werden können, z.B. ein polymeres MDI mit einer Viskosität von 2500 mPas bei 25°C. Trotz der daraus resultierenden höheren Viskosität des Reaktionsgemisches werden mit dem erfindungsgemäßen Verfahren homogene Schaumplatten mit guten Oberflächen hergestellt, da ein Zusammenfließen von einzelnen Strängen des Reaktionsgemisches nicht nötig ist. Beim Auftrag mittels der erfindungsgemäßen Gießvorrichtung lassen sich aber auch Reaktionssysteme mit hochviskosen Isocyanattypen vorteilhaft verarbeiten, da - anders als bei konventionellem Auftrag z.B. mittels Gießharke - keine Einzelstränge existieren. Die Notwendigkeit zum Verfließen entfällt damit.

Der NCO-Gehalt der Isocyanatkomponente B) beträgt bevorzugt von $\geq 29,0$ Gew.-% bis $\leq 33,0$ Gew.%, und weist bevorzugt eine Viskosität bei 25 °C von $\geq 80$ mPas bis $\leq 2900$ mPas, besonders bevorzugt von $\geq 95$ mPas bis $\leq 850$ mPas bei 25°C auf.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Bei Angaben zur Viskosität handelt es sich um die dynamische Viskosität, bestimmt mittels DIN EN ISO 3219:1994-10 "Kunststoffe - Polymere/Harze in flüssigem, emulgiertem oder dispergiertem Zustand".

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A) beschriebenen Polyolen. Es ist möglich, dass das Isocyanat ein Präpolymer ist, welches erhältlich ist durch Reaktion eines Isocyanats mit einer NCO-Funktionalität von $\geq 2$ und Polyolen mit einem Molmasse $M_n$ von $\geq 62$ g/mol bis $\leq 8000$ g/mol und OH-Funktionalitäten von $\geq 1,5$ bis $\leq 6$.

Aus Isocyanat-reaktiver Komponente A) und Isocyanatkomponente B) wird durch Mischung ein Reaktionsgemisch erzeugt, welches zu PUR- oder zur PUR/PIR - Schäumen reagieren kann. Dieses Reaktionsgemisch kann direkt in einem Mischkopf erzeugt werden.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 90 bis 600 führen, bevorzugt zwischen 115 und 400. Diese Kennzahl liegt bevorzugt in einem Bereich von > 180 bis < 450 (in diesem Bereich liegt ein hoher Anteil an Polyisocyanuraten (PIR) vor und der Hartschaum wird als PIR-Schaum oder PUR/PIR-Schaum bezeichnet). Ein anderer bevorzugter Bereich für die Isocyanat-Kennzahl ist der Wertebereich von > 90 bis < 140 liegen (in diesem Bereich wird der Hartschaum als Polyurethanschaum (PUR-Schaum) bezeichnet).

Das Reaktionsgemisch enthält weiterhin gegebenenfalls D) Katalysatorkomponenten, welche geeignet sind, die Treibreaktion, die Urethanreaktion und / oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente A) vorgelegt werden.

Hierfür geeignet sind insbesondere eine oder mehrere katalytisch aktive Verbindungen ausgewählt aus den folgenden Gruppen:

D1) Aminische Katalysatoren, z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N"-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,

In einer besonders bevorzugten Ausführungsform werden in der Katalysatorkomponente ein oder mehrere aminische Verbindungen gemäß folgender Struktur eingesetzt:

$$(CH_3)_2N\text{-}CH_2\text{-}CH_2\text{-}X\text{-}CH_2\text{-}CH_2\text{-}Y$$

wobei Y = $NR_2$ oder OH, vorzugsweise Y = $N(CH_3)_2$ oder OH, besonders bevorzugt Y = $N(CH_3)_2$ und wobei X= NR oder O, vorzugsweise X= N-CH$_3$ oder O, besonders bevorzugt X= N-CH$_3$. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

D2) Carboxylate von Alkali- oder Erdalkalimetallen, insbesondere Natriumacetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat. und Ammoniumcarboxylate. Insbesondere bevorzugt sind Natrium-, Kalium-und Ammoniumcarboxylate. Bevorzugte Carboxylate sind Formiate, Ethylhexanoate (=Octoate), Proprionate und Acetate.

Bevorzugt enthält der Katalysator einen oder mehrere Katalysatoren ausgewählt aus der Gruppe bestehend aus Kaliumacetat, Kaliumoctoat, Pentamethyldiethylentriamin, N,N',N"-Tris-(dimethylaminopropyl)hexahydrotriazin, Tris(dimethylaminomethyl)phenol, Bis[2-(N,N-dimethylamino)ethyl] ether und N,N-Dimethylcyclohexylamin, besonders bevorzugt aus Pentamethyldiethylentriamin, N,N',N"-Tris-(dimethylaminopropyl)hexahydrotriazin und N,N-Dimethylcyclohexylamin, besonders besonders bevorzugt aus Pentamethyldiethylentriamin, N,N',N"-Tris-(dimethylaminopropyl)hexahydrotriazin und N,N-Dimethylcyclohexylamin in Kombination mit Kaliumacetat, Kaliumoctoat oder Kaliumformiat oder Natriumformiat

Die zur Herstellung des Hartschaumstoffes nötigen Katalysatoren, insbesondere aminische Katalysatoren (D1) in Kombination mit als Trimerisationskatalysatoren eingesetzten Salze, werden in einer bevorzugten Ausführungsform in solcher Menge eingesetzt, dass z.B. auf kontinuierlich produzierenden Anlagen Elemente mit flexiblen Deckschichten mit Geschwindigkeiten bis zu 80 m/min je nach Elementstärke produziert werden können.

Die Reaktivität der Reaktionsmischung wird i.d.R. mittels Katalysator (oder über andere die Reaktivität erhöhende Komponenten, z.B. Aminopolyether), auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Typische Startzeiten (gekennzeichnet durch den Beginn des Aufschäumens der Reaktionsmischung bei visueller Beurteilung) für die Verarbeitung mittels konventioneller Technik liegen im Bereich von 2s bis 50s.

Mittels Auftrag über eine erfindungsgemäße Gießvorrichtung lassen sich nun auch Reaktionsgemische mit hohen bzw. höheren Reaktivitäten, d.h. Startzeiten von <5s, insbesondere <2s, ganz besonders < 1s und Abbindezeiten von <25 s, insbesondere <20s und ganz besonders <14s vorteilhaft verarbeiten. Die Verwendung der erfindungsgemäßen Gießvorrichtung kann insbesondere für die Herstellung von dünnen Platten vorteilhaft sein, da hier wenig Material für das Zusammenfließen zur Verfügung steht.

Bevorzugt wird eine Kombination aus Katalysatorkomponenten D1 und D2 in dem Reaktionsgemisch verwendet. In diesem Fall sollte das molare Verhältnis so gewählt sein, dass das Verhältnis von D2/D1 zwischen 0,1 und 80 liegt, insbesondere zwischen 2 und 20. Kurze Abbindezeiten können zum Beispiel mit mehr als 0,9 Gew.-% Kalium-2-ethylhexanoat bezogen auf alle Komponenten des Reaktionsgemisches erzielt werden.

Die Reaktionsmischung enthält weiterhin so viel Treibmittel C), wie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als Treibmittel werden vorzugsweise physikalische Treibmittel ausgewählt aus wenigstens einem Mitglied der Gruppe bestehend aus Kohlenwasserstoffen, halogenierten Ethern und perfluorierten und teilfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cyclo-Pentan, Butan, Isobutan, Propan), Ethern (z. B. Methylal), halogenierten Ethern, (per)fluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird eine Mischung aus Cyclopentan und Isopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen. Mit dem erfindungsgemäßen Verfahren lassen sich (hydro)fluorierte Olefine in vorteilhafter Weise als Treibmittel für Verbundsysteme einsetzen, da sich im Vergleich zu mit anderen Auftragstechniken hergestellten Verbundelementen Verbundelemente mit besseren Oberflächenstrukturen und verbesserter Haftung zur Deckschicht herstellen lassen.

Zusätzlich oder auch statt der oben aufgeführten physikalischen Treibmittel können auch chemische Treibmittel (auch "Co- Treibmittel") verwendet werden. Bei diesen handelt es sich besonders bevorzugt um Wasser und / oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der Komponente A.

Bevorzugt wird für Verbundelemente eine Mischung aus 0 und 6,0 Gew.-% an Co-Treibmittel und 1,0 bis 30,0 Gew.-% an Treibmittel, jeweils bezogen auf 100 Gew.-% der Komponente A, eingesetzt. Das Mengenverhältnis von Co-Treibmittel zu Treibmittel kann aber auch je nach Bedarf von 1:7 bis 1:35 betragen.

Das erfindungsgemäße Verfahren lässt sich in besonders vorteilhafter Weise auch für den Auftrag eines Reaktionsgemisches verwenden, welches schon in der Auftragsvorrichtung anfängt zu schäumen ("Froth"), z.B. durch einen niedrigen Siedepunkt und/oder schlechte Löslichkeit des Treibmittels, hohe Temperaturen in der Düse und/oder Reaktionsstart bereits in der Düse. Mit einer Standard-Auftragsvorrichtung von Strängen, z.B. mittels einer Gießharke, findet man bei der Auftragung von Froth eine schlechte Verteilung, was wiederum einen negativen Einfluss auf die Qualität des Endproduktes haben kann. Das erfindungsgemäße Verfahren führt bei der Auftragung zu einer sofortigen Benetzung der Deckschicht über die komplette Breite, was insbesondere bei der Auftragung eines schäumenden Gemisches zu homogeneren Produkten führt.

Wie oben beschrieben, eröffnet das Verfahren insbesondere die Möglichkeit, dem Reaktionsgemisch auch feste Komponenten und/oder Komponenten mit hohen Viskositäten statt oder zusätzlich zu den in der Regel flüssigen (oder gasförmigen) Komponenten beizumischen, z.B. feste Flammschutzmittel wie Blähgraphit, Melamin, Ammoniumpolyphosphat, roter Phosphor oder inorganische Oxide und Hydroxide. Diese können entweder als Zusatzstoffe in der Isocyanat-reaktiven Komponente A) enthalten sein, oder separat, in der Regel als Dispersion in anderen Hilfsstoffen, z.B. flüssigen Flammschutzmitteln zugesetzt werden.

Da der Zusatz von Feststoffen die Viskosität der Reaktionsmischung erhöht, kommt es - wie bereits oben beschrieben - zu Limitierungen für die Verarbeitung mittels konventioneller Auftragstechnik, z.B. mittels Gießharke.

Typischerweise liegt die maximal verarbeitbare Viskosität einer Mischung aus den Komponenten A), C), D) und E) bei ca. 5000 mPas (25°C). Diese Limitierung für den Einsatz solcher hochviskoser, eventuell feststoffhaltiger Mischungen existiert bei der Verarbeitung mittels erfindungsgemäßer Gießvorrichtung nicht, da das Reaktionsgemisch nicht als einzelne Stränge aufgetragen wird. Hierdurch lassen sich auch Polyolformulierungen oder Isocyanate mit Viskositäten bis zu 20000 mPas bei 25 °C vorteilhaft verarbeiten.

Die in dem erfindungsgemäßen Verfahren verwendete Anlage zum Auftragen eines aufschäumenden Reaktionsgemisches umfasst mindestens eine Gießvorrichtung, wobei die Gießvorrichtung aufweist:

- einen Zulaufanschluss zur Einspeisung des Reaktionsgemisches aus den Komponente A), B) und C) sowie gegebenfalls D) und E),
- wenigstens einen sich in einer Querrichtung (Q) erstreckenden Austrittsspalt zum Austritt des Reaktionsgemisches,
- zwei sich gegenüberliegend angeordnete Spaltplatten,

wobei sich in einer Höhenrichtung (H) über dem Austrittsspalt ein Spaltraum zwischen den Spaltplatten erstreckt, bei der ein mit dem Zulaufanschluss verbundener Zulaufkanal zwischen den Spaltplatten ausgebildet ist, der den Spaltraum über dem Austrittsspalt in Höhenrichtung (H) abschließt, wobei der Zulaufkanal einen Kanalquerschnitt aufweist, dessen Hauptabmaß größer ist als die Breite (B) des Spaltraumes, so dass das Reaktionsgemisch über der Länge des Zulaufkanals verteilt in den Spaltraum einleitbar ist.

Die in dem erfindungsgemäßen Verfahren verwendete Gießvorrichtung und die Anlage umfassend diese Gießvorrichtung, in ihren unterschiedlichen Ausführungsformen, ist in der bisher unveröffentlichter Patentanmeldungen mit der internationalen Anmeldenummer PCT/EP2016/068574 beschrieben.

Die erfindungsgemäß in der Anlage eingesetzte mindestens eine Gießvorrichtung weist folgende Merkmale auf: Sie enthält eine Führung des Reaktionsgemisches zwischen dem Zulaufanschluss und dem Austrittsspalt, die so weitergebildet ist, dass jede Volumeneinheit des Reaktionsgemisches zwischen dem Zulaufanschluss und dem Austrittsspalt die Gießvorrichtung mit der gleichen Durchlaufzeit durchlaufen kann. Mit anderen Worten weist jeder Stromfaden des Reaktionsgemisches zwischen dem Zulaufanschluss und dem Austrittsspalt die gleiche Verweilzeit auf. Dies wird erreicht mit einem Zulaufkanal, der sich innenseitig der Gießvorrichtung an den Zulaufanschluss anschließt und wobei der Zulaufkanal zwischen den Spaltplatten ausgebildet ist.

Die Ausbildung "zwischen" den Spaltplatten beschreibt dabei eine Ausgestaltung des Zulaufkanals, der entweder in einer ersten Spaltplatte, in einer gegenüberliegenden zweiten Spaltplatte oder in beiden Spaltplatten durch eine entsprechende Geometrie ausgebildet ist. Der Querschnitt des Zulaufkanals muss dabei nicht rund sein, sondern kann auch halbkreisförmig, trapezförmig, elliptisch, rechteckig oder dergleichen ausgebildet sein. Insbesondere kann der Zulaufkanal auch dadurch gebildet werden, dass nur in einer der beiden Spaltplatten eine entsprechende Aussparung, beispielsweise mit einem halbkreisförmigen oder rechteckigen Kanalquerschnitt, ausgebildet ist. Die gegenüberliegende Spaltplatte kann dabei eine Planfläche aufweisen und den Zulaufkanal seitlich begrenzen oder die gegenüberliegende Spaltplatte weist in einer gespiegelten Weise die gleiche oder eine abgewandelte ausgesparte Geometrie auf, um den Kanalquerschnitt symmetrisch über dem Spaltraum auszubilden. Jedenfalls beschreibt die Ausbildung des Zulaufkanals "zwischen" den Spaltplatten im Sinne des vorliegenden Wortgebrauches jede mögliche Form von Aussparungen und sonstigen Geometrien in der Oberfläche der Spaltplatte.

Selbstverständlich kann auch der Spaltraum sowohl in beiden Spaltplatten eingearbeitet sein oder auch nur einseitig in einer der Spaltplatten. Insbesondere ist es auch möglich, den Zulaufkanal mit dem Zulaufanschluss und dem Spaltraum nur in einer Spaltplatte einzubringen, da dann in besonders vorteilhafter Weise die gegenüberliegende Spaltplatte komplett plan ausgeführt werden kann.

Das Hauptabmaß des Kanalquerschnittes ist dabei breiter als die Breite des Spaltraumes, sodass das Reaktionsgemisch bis zum Ende des Zulaufkanals gelangen kann, wobei der Kanalquerschnitt des Zulaufkanals so ausgebildet ist, dass ein definierter Druckverlust des Strömungsgemisches mit zunehmendem Abstand vom Zulaufanschluss erzeugt wird. Das Reaktionsgemisch verlässt den Zulaufkanal gleichmäßig über seiner gesamten Länge verteilt und gelangt nach Art eines Strömungsvorhanges in den Spaltraum, der sich unterhalb des Zulaufkanals anschließt. Dadurch wird ein Linienausfluss des Reaktionsgemisches aus dem Zulaufkanal erzeugt, sodass das Reaktionsgemisch über der im Wesentlichen gesamten Länge des Zulaufkanals verteilt in den Spaltraum einleitbar ist. Die Länge des Zulaufkanals erstreckt sich in Querrichtung in der Länge, die auch der Länge des Austrittsspaltes entspricht. Insbesondere schließen die Enden des Austrittsspaltes mit den Enden des Zulaufkanals ab.

Gemäß einer vorteilhaften Weiterbildung der in dem erfindungsgemäßen Verfahren eingesetzten Gießvorrichtung ist der Kanalquerschnitt mit zunehmendem Abstand vom Zulaufanschluss kleiner werdend ausgebildet. Der Kanalquerschnitt ist vorteilhafterweise in der Anschlussstelle zum Zulaufanschluss am größten und mit zunehmendem Abstand vom Zulaufanschluss verkleinert sich der Kanalquerschnitt zunehmend. Der Zulaufkanal kann sich in Querrichtung zu beiden Seiten gleichermaßen vom Zulaufanschluss weg erstrecken, und der Zulaufkanal weist im Anschluss an den Zulaufanschluss den größten Querschnitt auf. Die jeweiligen äußeren Enden des Zulaufkanals können einen so kleinen Querschnitt aufweisen, dass dieser mit der Breite des Spaltraumes abschließt. Dadurch wird vermieden, dass an den Enden des Zulaufkanals eine erhöhte Menge an Reaktionsgemisch aus dem Austrittsspalt austreten kann.

Die Breite des Spaltraumes kann gleich ausgebildet sein mit der Breite des Austrittsspaltes oder die Breite des Austrittsspaltes ist zumindest geringfügig kleiner ausgebildet als die Breite des Spaltraumes, insbesondere um noch eine Rest-Druckdifferenz im Reaktionsgemisch vor und nach Durchtritt durch den Austrittsspalt zu erhalten, wodurch sich noch eine weitere Vergleichmäßigung des Austrittes des Reaktionsgemisches ergibt.

In einer weiteren Ausführungsform kann die Breite des Austrittsspaltes von der Breite des Spaltraumes startend zur Austrittsöffnung hin größer werdend ausgeführt werden, um die Austrittsgeschwindigkeit zu verringern oder um einer Volumenvergrößerung beim Beginn des Aufschäumens zu begegnen.

Auch ist es von Vorteil, wenn der Spaltraum eine Breite aufweist, die über der im Wesentlichen gesamten flächigen Erstreckung des Spaltraumes zwischen den Spaltplatten gleichbleibend ausgebildet ist, wobei jedoch kleine lokale Abweichungen der Breite von der ansonsten überall gleichen Breite vorkommen können, beispielsweise an Stellen, an denen Schraubelemente durch den Spaltraum verlaufen. Zusätzlich ist es vorteilhaft, wenn der Zulaufkanal eine Krümmung aufweist, sodass die Höhe des Spaltraumes mit zunehmendem Abstand vom Zulaufanschluss über dem Austrittsspalt kleiner wird. Mit zunehmender Entfernung vom Zulaufanschluss nimmt damit die Höhe des Spaltraums zwischen dem Austrittsspalt und dem Zulaufkanal ab, sodass der Strömungswiderstand und die Durchlaufzeit zwischen dem Zulaufkanal und dem Austrittsspalt sinken. Zugleich erhöht sich jedoch der Strömungswiderstand über einer längeren Strecke durch den Zulaufkanal, sodass der Gesamt-Druckverlust konstant bleibt. Dadurch, dass die Fließgeschwindigkeit im Zulaufkanal höher ist als im Spalt, wird insgesamt erreicht, dass das Reaktionsgemisch zwischen dem Zulaufanschluss und dem Austrittsspalt über der gesamten Länge jedes Fließweges die gleiche Durchlaufzeit erfährt.

Der sich ändernde Kanalquerschnitt des Zulaufkanals und die Krümmung zur Einstellung des Höhenmaßes des Spaltraumes über dem Austrittsspalt sind so aufeinander abgestimmt, dass die über der gesamten Länge des Austrittsspaltes gleiche Durchlaufzeit des Reaktionsgemisches erzeugt wird. Somit ist es auch denkbar, die Krümmung des Zulaufkanals mit zunehmendem Abstand vom Zulaufanschluss größer werdend auszubilden. Der Zulaufkanal kann beispielsweise eine etwa parabelförmige Krümmung aufweisen, wobei die Krümmung mit zunehmendem Abstand vom Zulaufanschluss zunimmt. Dadurch erhält der Zulaufkanal etwa die Form eines Kleiderbügels, sodass insbesondere die randseitige Begrenzung des flächigen Spaltraumes von einer Dreiecksform abweicht. Vielmehr erstreckt sich der Spaltraum zwischen dem Austrittsspalt und dem Zulaufkanal mit insgesamt gleichbleibender Breite, und durch den über der gesamten flächigen Erstreckung des Spaltraumes gleichen Breite ergibt sich zusätzlich eine Homogenisierung der Strömungsgeschwindigkeit. Als besonderes Kennzeichen kann dabei erreicht werden, dass das Reaktionsgemisch über der gesamten Länge des Austrittsspaltes in Querrichtung die gleiche Austrittsgeschwindigkeit aufweist.

Die Abstimmung der Größenverhältnisse und Geometrien der an der Führung des Reaktionsgemisches beteiligten Komponenten der Gießvorrichtung erfolgt beispielsweise computergestützt, vorzugsweise mit einer computerfluiddynamischen Berechnung (CFD). Die Länge des Zulaufanschlusses und/oder die Länge des Zulaufkanals und/oder die Höhe des Spaltraumes in Höhenrichtung über dem Austrittsspalt sind dabei so bestimmt, dass die Volumenelemente des Reaktionsgemisches über der gesamten Länge des Austrittsspaltes eine zueinander gleiche Durchlaufzeit erfahren können, dass jedes Volumenelement über der Länge des Austrittsspaltes einen zueinander gleichen Geschwindigkeitswert aufweist und dass die Durchlaufzeit des Reaktionsgemisches durch die Gießvorrichtung kleiner ist als die Reaktionszeit. Damit ist gemeint, dass die Durchlaufzeit des Reaktionsgemisches vom Mischkopf, der dem Zulaufanschluss vorgelagert ist, und dem Austrittsspalt, so klein gewählt wird, dass im Reaktionsgemisch nicht bereits vor Austritt aus dem Austrittsspalt eine Aufschäumung einsetzt.

Die in dem erfindungsgemäßen Verfahren verwendete Anlage zum Auftragen des aufschäumenden Reaktionsgemisches umfassend Isocyanat-reaktive Komponente A), Polyisocyanatkomponente B) und Treibmittelkomponente C) weist mindestens eine, bevorzugt mehrere der hier beschriebenen Gießvorrichtungen auf, wobei die Austrittsspalte der mehreren Gießvorrichtungen sich in einer gemeinsamen Querrichtung oder bogenförmig über der Deckschicht erstrecken.

Die im erfindungsgemäßen Verfahren mindestens eine verwendete Gießvorrichtung [(100), die Bezugszeichen beziehen sich auf die in den Figuren beschriebenen beispielhaften Ausführungsformen zur Verdeutlichung] weist einen Zulaufanschluss (12) zur Einspeisung des Reaktionsgemisches (10), wenigstens einen sich in einer Querrichtung (Q) erstreckenden Austrittsspalt (13) zum Austritt des Reaktionsgemisches (10) und zwei sich gegenüberliegend angeordnete Spaltplatten (14), wobei sich in einer Höhenrichtung (H) über dem Austrittsspalt (13) ein Spaltraum (15) zwischen den Spaltplatten (14) erstreckt, auf, und ist dadurch gekennzeichnet, dass ein mit dem Zulaufanschluss (12) verbundener Zulaufkanal (16) zwischen den Spaltplatten (14) ausgebildet ist, der den Spaltraum (15) über dem Austrittsspalt (13) in Höhenrichtung (H) abschließt, wobei der Zulaufkanal (16) einen Kanalquerschnitt (17) aufweist, dessen Hauptabmaß größer ist als die Breite (B) des Spaltraumes (15), sodass das Reaktionsgemisch über der Länge des Zulaufkanals (16) verteilt in den Spaltraum (15) einleitbar ist.

Weiterhin und bevorzugt sind die folgenden Ausführungsformen der Gießvorrichtungen:

2) Die Gießvorrichtung (100) ist dadurch gekennzeichnet, dass der Kanalquerschnitt (17) mit zunehmendem Abstand vom Zulaufanschluss (12) kleiner werdend ausgebildet ist, und/oder

3) die Gießvorrichtung (100) ist dadurch gekennzeichnet, dass der Spaltraum (15) eine Breite (B) aufweist, die über der im Wesentlichen gesamten flächigen Erstreckung des Spaltraumes (15) zwischen den Spaltplatten (14) gleichbleibend ausgebildet ist, und/oder

4) die Gießvorrichtung (100) ist dadurch gekennzeichnet, dass der Zulaufkanal (16) eine Krümmung aufweist, sodass der Spaltraum (15) mit zunehmendem Abstand vom Zulaufanschluss (12) eine kleiner werdende Höhe über dem Austrittsspalt (13) aufweist. In diesem Fall ist es möglich, dass

5) die Krümmung des Zulaufkanals (16) mit zunehmendem Abstand vom Zulaufanschluss (12) größer werdend ausgebildet ist.

Die Gießvorrichtung mit den Merkmalen gemäß 2), 3), 4) und/oder 5) kann bevorzugt weiterhin dadurch gekennzeichnet sein, dass

6) der sich ändernde Kanalquerschnitt (17) des Zulaufkanals (16) und/oder die Krümmung des Zulaufkanals (16) und/oder die Ausbildung des Spaltraumes (15) derart bestimmt sind, dass die Austrittsgeschwindigkeit jedes Volumenelementes des Reaktionsgemisches (10) über der Länge des Austrittsspaltes (13) einen zueinander gleichen Geschwindigkeitswert aufweist und/oder dass

7) der sich ändernde Kanalquerschnitt (17) des Zulaufkanals (16) und/oder die Krümmung des Zulaufkanals (16) und/oder die Ausbildung des Spaltraumes (15) derart bestimmt sind, dass jedes Volumenelement des Reaktionsgemisches (10) bezogen auf die Länge des Austrittsspaltes (13) eine zueinander gleiche Durchlaufzeit vom Zulaufanschluss (12) bis zum Austritt aus dem Austrittsspalt (13) aufweist, und/oder

8) dass die Länge des Zulaufanschlusses (12) und/oder die Länge des Zulaufkanals (16) und/oder die Höhe des Spaltraumes (15) in Höhenrichtung (H) über dem Austrittsspalt (13) so bestimmt sind, dass die Durchlaufzeit des Reaktionsgemisches (10) kleiner ist als die Reaktionszeit, und/oder

9) dass Verstellmittel vorgesehen sind, mit denen die Breite des Austrittsspaltes (13) einstellbar ist, wobei über der Länge des Austrittsspaltes (13) verteilt mehrere Verstellmittel vorgesehen sind.

Um einer Verkürzung des Austrittsspaltes durch ein Zuwachsen des Spaltes von den Seiten her entgegenzuwirken, kann es von Vorteil sein, jede einzelne in der Anlage verwendete Gießvorrichtung oder auch die gesamte Anlage an sich so auszuführen, dass ihr Abstand zu der unteren Deckschicht während des erfindungsgemäßen Verfahrens, d.h. während des Auftragens des Reaktionsgemischs, variiert werden kann.

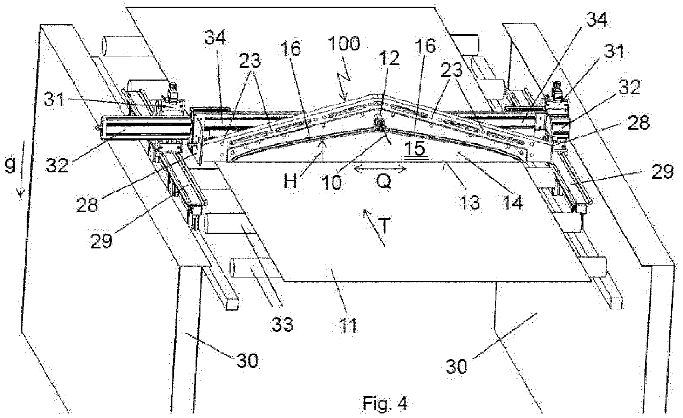

Beim Produktionsstart wird die Position der Gießvorrichtung über der Deckschicht so eingestellt, dass das Reaktionsgemisch auf die untere Deckschicht in gewünschter Weise und Breite aufgetragen wird. Dabei kann es sinnvoll sein, die Gesamtlänge des Austrittsspaltes der Gießvorrichtung größer als die Breite der Deckschicht vorzusehen, um eine mögliche Einschnürung des Austragsfilms an den Seiten zu kompensieren. Ein seitliches Zuwachsen des Austrittspaltes während des Betriebes kann dann darüber hinaus durch eine Verringerung des Höhenabstands ausgeglichen werden, d.h. die Höhe der Gießvorrichtung bzw. die Anlage umfassend die mindestens eine Gießvorrichtung wird im Betrieb durch eine geeignete Verstellvorrichtung so nachgeführt, dass die Deckschicht in über die Zeit konstanter Breite benetzt wird. Durch diese Ausführungsform lässt sich die Betriebszeit der Anlage im erfindungsgemäßen Verfahren erhöhen. Ein Ausführungsbeispiel ist in Figur 4 gezeigt. Eine vorteilhafte Weiterbildung dieser in dem erfindungsgemäßen Verfahren eingesetzten Ausführungsform der Gießvorrichtung, die eine Verstellung des Abstandes des Austrittsspaltes zur Deckschichtoberfläche ermöglicht, besteht darin, während der Produktion die Länge des aktuellen Austragsfilms z. B. über Laservermessung messtechnisch zu erfassen und damit die Abstandsposition z.B. motorisch zu regeln.

Auch kann es von Vorteil sein, die Gießvorrichtung während der Verwendung im Verfahren mit einem oder mehreren Einlegern beispielsweise aus Kunststoff zu versehen, der die Spaltplatten innenseitig vor Verunreinigung schützt. Die Einleger können bevorzugt als formstabile, separate Kunststoffteile vorgesehen werden, deren Geometrie auf die innenseitige Oberflächengeometrie der Spaltplatte angepasst ist, z.B. können die Kunststoffeinleger als Spritzgussteil oder als Tiefziehteil hergestellt werden. Es ist aber auch möglich, den/die Kunststoffeinleger als flexible Folie, die sich der Geometrie der Oberfläche anpasst, vorzusehen. Neben der Ausführung aus Kunststoff können die Einlegeteile auch aus Metall oder anderen geeigneten Materialien hergestellt werden. Je nach Materialwahl können die Einleger als Mehrweg- oder Einwegteile genutzt werden. In jedem Fall hat die Verwendung von Einlegern den Vorteil, dass eine zeitintensive Reinigung der Gießvorrichtung entfällt und diese schneller für den nächsten Einsatz zur Verfügung steht. In einer besonders geeigneten Ausführungsform des Verfahrens werden die Einleger vor dem Produktionsbeginn in die Gießvorrichtung eingelegt und nach Beendigung wieder entfernt. Gemäß einer vorteilhaften Weiterbildung der in dem erfindungsgemäßen Verfahren eingesetzten Gießvorrichtung wird diese klappbar gestaltet, so dass das Einlegen und Entfernen der Einleger bevorzugt an der aufgeklappten Gießvorrichtung in Produktionsstellung oder in einer Parkposition erfolgen kann.

Die Verwendung von separaten Einlegern hat folgende Vorteile: Je nach Materialwahl und/oder Oberflächenausführung der Einleger wird nicht nur die Reinigung der Gießvorrichtung bzw. der in dem erfindungsgemäßen Verfahren verwendeten Anlage erleichtert und beschleunigt, sondern auch die Betriebsdauer der Anlage kann wegen des geringeren Anhaftens des Reaktionsgemisches an der Oberfläche der Einleger, die in vorteilhafter Weise hauptsächlich vom Reaktionsgemisches kontaktiert werden, und / oder langsameren Zuwachsens des Spaltraumes erhöht werden.

In der Anlage kann die wenigstens eine Gießvorrichtung um eine Achse beispielsweise parallel zur Deckschicht und senkrecht zur Transportrichtung der Deckschicht kippbar aufgenommen werden, sodass die Vorrichtung das Reaktionsgemisch nicht exakt senkrecht auf die Deckschicht aufbringen muss, sondern beispielsweise stechend oder schleppend. Über die Kippstellung kann der Winkel zwischen dem Austragsfilm und der Deckschicht so eingestellt werden, dass sich optimale Strömungsverhältnisse des Reaktionsgemisches im Auftreffbereich ergeben.

In der Anlage kann die wenigstens eine Gießvorrichtung außerdem um eine Achse senkrecht zu der unteren Deckschicht drehbar angeordnet sein. Je nach Wahl der Winkelstellung der Gießvorrichtung und damit des Winkels zwischen dem Austrittsspalt und der Transportrichtung der Deckschicht ist die Auftragsbreite des Reaktionsgemisches an die Deckschichtbreite angepasst und/oder die Führung des aufsteigenden Schaumes, der sich aus dem Reaktionsgemisch bildet, wird bei Erreichen der oberen Deckschicht günstig beeinflusst.

Insbesondere weist die in dem erfindungsgemäßen Verfahren verwendete Anlage zum Auftragen des aufschäumenden Reaktionsgemisches eine Anordnung von mehreren Gießvorrichtungen mit den oben genannten Merkmalen auf.

Werden mehrere Gießvorrichtungen verwendet, werden diese insbesondere so aneinandergereiht, dass die Gesamtlänge des Austrittsspaltes in der gemeinsamen Querrichtung an die Deckschichtbreite angepasst ist. Dadurch wird die Möglichkeit geschaffen, die Gießvorrichtung kleiner auszubilden und die Durchlaufzeit somit zu reduzieren, und die einzelnen, mehreren Spalträume, die durch jeweilige Zulaufkanäle oberseitig begrenzt sind, bilden für sich einzelne Gießvorrichtungen, wobei jedoch die Länge des gesamten Austrittsspaltes nicht der Deckschichtbreite entsprechen muss. Jede der einzelnen Gießvorrichtungen kann einen separaten Zulaufanschluss aufweisen, der durch jeweils separate Mischköpfe gespeist wird, wobei mit Vorteil auch die Möglichkeit besteht, mit einem Mischkopf die mehreren Zulaufanschlüsse zu speisen. Zur Zufuhr des Reaktionsgemisches an die Zulaufanschlüsse kann ein Schlauchsystem oder ein Rohr-Verteilersystem vorgesehen werden.

Gemäß einer Ausführungsform der in dem erfindungsgemäßen Verfahren verwendeten Anlage können die Spaltplatten der mehreren Gießvorrichtungen auf einer oder jeder Seite des Spaltraumes einteilig miteinander ausgebildet sein. Bei einer einteiligen Ausbildung können die verschiedenen Zulaufkanäle über einen zentralen Zulaufanschluss und einem nachgeschalteten, beispielsweise sternförmigen, Verteilersystem gespeist werden. Die Spaltplatten können derart formgebend bearbeitet werden, dass mehrere Zulaufkanäle und sich unter den Zulaufkanälen anschließende Spalträume gebildet werden. Insbesondere ist es denkbar, jedem Zulaufkanal einen eigenen Zulaufanschluss zuzuordnen.

Auch ist es mit Vorteil möglich, dass die den Zulaufanschlüssen fernen Enden der Zulaufkanäle der mehreren Gießvorrichtungen aneinander angrenzen. Sofern die Durchlaufzeit und die Austrittsgeschwindigkeit des Reaktionsgemisches aus dem Austrittsspalt der einzelnen Gießvorrichtungen über der jeweiligen Spaltlänge in Querrichtung gleich sind, ist zu erwarten, dass die Durchlaufzeit und die Austrittsgeschwindigkeit des Reaktionsgemisches entlang des gesamten Austrittsspaltes gleich sind. Damit wird erreicht, dass über der gesamten Deckschichtbreite auch insgesamt ein konstanter, gleichförmiger Auftrag des Reaktionsgemisches erreicht wird. Die Gesamtlänge des Austrittsspaltes entspricht dabei nahezu der Deckschichtbreite, wobei vorgesehen sein kann, die Auftragsbreite des Reaktionsgemisches geringfügig kleiner zu wählen als die Deckschichtbreite. Beispielsweise kann die Deckschicht eine Breite von 120 cm aufweisen, und die Gesamtlänge des Austrittsspaltes beträgt beispielsweise 115 cm und erstreckt sich in Breitenrichtung über der Deckschicht. Die geringere Auftragsbreite des Reaktionsgemisches im Verhältnis zur Breite der Deckschicht wird bevorzugt gewählt, um einen unbeabsichtigten Austrag außerhalb der Deckschicht zu vermeiden. Da das Reaktionsgemisch auch in der Deckschichtbreite aufschäumt und sich damit ausdehnt, wird somit auch der Randbereich der Deckschicht erreicht und überdeckt.

Bei einer Aneinanderreihung mehrerer Gießvorrichtungen sind diese beispielsweise an einem verstellbaren Träger aufgenommen, wobei, wie vorstehend beschrieben, die mehreren Gießvorrichtungen auch in einer baulichen Einheit ausgebildet sein können, beispielsweise mit gemeinsamen Spaltplatten.

Bei der Verwendung von mehreren Gießvorrichtungen werden diese bevorzugt so angeordnet, dass die Austrittspalte der einzelnen Gießvorrichtungen einen gemeinsamen, durchgehenden und geraden oder gebogenen Austrittspalt bilden. In einer erweiterten Ausführungsform können diese nämlich auch relativ zueinander so verdreht werden, dass die einzelnen Austrittsspalte jeweils einen Winkel zueinander einschließen und insgesamt ein Polygon bzw. einen Bogen bilden. Daraus ergibt sich eine noch bessere Anpassbarkeit an die Deckschichtbreite und/oder Führung des aufsteigenden Schaumes bei Erreichen der oberen Deckschicht. Bei der Verwendung mehrerer Gießvorrichtungen ist es ebenfalls möglich, dass diese in Bewegungsrichtung der Deckschicht gesehen hintereinander (gegebenenfalls versetzt) angeordnet sind, so dass die aus der Austrittspalte einer Gießvorrichtung ausgetragene Reaktionsmischung zumindest teilweise die aus den Austragsöffnungen der anderen Gießvorrichtungen ausgetragene Reaktionsmischung kontaktiert.

In einer bevorzugten Ausführungsform weist die erfindungsgemäß einzusetzende Anlage aufweisend zwei oder mehrere der beschriebenen Gießvorrichtungen auf, wobei die Austrittsspalte der Gießvorrichtungen sich in einer gemeinsamen Querrichtung (Q) oder über einem Bogen über der Deckschicht erstrecken. Die Anlage ist somit zum Auftragen eines aufschäumenden Reaktionsgemisches auf wenigstens einer Teilbreite einer Deckschicht und insbesondere zur Herstellung eines Verbundelementes besonders geeignet. Die Spaltplatten der mehreren Gießvorrichtungen können auf jeder Seite des Spaltraumes einteilig miteinander ausgebildet sind. Bei der Verwendung mehrerer Gießvorrichtungen können die den Zulaufanschlüssen fernen Enden der Zulaufkanäle der mehreren Gießvorrichtungen aneinander angrenzen.

Allgemein kann insbesondere bei der kontinuierlichen Produktion von PUR- bzw. PUR/PIR-Schaumplatten das Problem bestehen, dass sich die verwendete Auftragsvorrichtung während des Auftragens zusetzt, insbesondere in den mit Reaktionsgemisch schwächer durchströmten Bereichen der verwendeten Vorrichtung.

Um diesem Problem zu entgegnen, kann in dem erfindungsgemäßen Verfahren vorgesehen werden, das Reaktionsgemisch mit einer Gasbeladung und insbesondere mit einer Luftbeladung zu versehen. Durch eine Luftbeladung wird ein Zusetzen des Spaltraumes insbesondere in den mit Reaktionsgemisch schwächer durchströmten Bereichen des Spaltraumes vermieden. Hierzu weist die Anlage eine Gasbeladeeinrichtung auf, mit der das Reaktionsgemisch mit einem Gas beladbar ist. Die Gasbeladeeinrichtung ist dabei so ausgebildet, dass die Gasbeladung mit Luft, mit Stickstoff, mit Kohlendioxid oder mit Edelgas, insbesondere Argon oder Helium, vorgenommen werden kann. Insbesondere mit getrockneter Luft oder mit Stickstoff wird vorteilhaft erreicht, dass sich der dünne Spaltraum zwischen den Spaltplatten nicht mit voraufschäumendem Reaktionsgemisch zusetzt.

Mit dem erfindungsgemäßen Verfahren können sich somit ein oder mehrere der folgenden Vorteile im Vergleich zu konventionellen Auftragstechniken verwirklichen lassen: ein gleichmäßiger Auftrag über die gesamte Bandbreite; es lassen sich schnelle Reaktionssysteme mit geringen Startzeiten einsetzen, dadurch sind höhere Bandgeschwindigkeiten möglich. Ebenfalls lassen sich hochviskose und/oder in der Düse schäumende Reaktionssysteme vorteilhaft einsetzen. Die fertigen PUR- bzw. PUR/PIR-Hartschäume weisen geringe Überwälzung bzw. Blasen- / Lunker auf und/oder zeigen eine gute Oberflächenqualität, eine bessere Haftung an der Deckschicht und/oder sind sehr homogen, verfügen z.B. über eine gleichmäßige Zellorientierung, homogene Dichteverteilung und gute mechanische Eigenschaften, z.B. Druckfestigkeit.

Die Figuren zeigen beispielhafte Ausführungsformen der in dem erfindungsgemäßen Verfahren einsetzbaren Gießvorrichtung sowie eine Anlage enthaltend diese Gießvorrichtung.

Figur 1    zeigt eine Gesamtansicht der Anlage mit einer Gießvorrichtung 100 und der Zuführung von Deckschichten sowie einer Doppelband-Transportanlage 21,

Figur 2    zeigt eine perspektivische Darstellung einer Spaltplatte 14 von derjenigen Seite, die den Spaltraum flächig begrenzt,

Figur 3    eine quergeschnittene Ansicht der Gießvorrichtung mit zwei aufeinander angeordneten Spaltplatten unter Bildung des Spaltraumes zwischen den Spaltplatten,

Figur 3a    eine abgewandelte Ausführungsform des Austrittsspaltes mit an diesem ausgebildeten Spaltlippen

Figur 4    eine perspektivische Ansicht der in dem erfindungsgemäßen Verfahren verwendeten Anlage mit eingebauter Gießvorrichtung zum Auftragen eines aufschäumenden Reaktionsgemisches

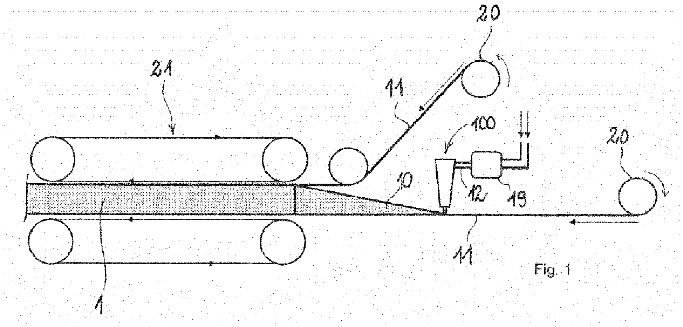

Figur 1 zeigt eine schematische Ansicht einer Anlage zum Betrieb eines Verfahrens, das zur Herstellung von Verbundelementen 1 dient. Die Anlage weist eine Doppelband-Transportanlage 21 auf, in die zwei Deckschichten 11 einlaufen. Eine untere Deckschicht 11 wird von einer Deckschichtrolle 20 abgerollt und eine obere Deckschicht 11 wird ebenfalls von einer weiteren Deckschichtrolle 20 abgerollt. Die beiden Deckschichten 11 werden mit einem Zwischenraum in die Transportanlage 21 eingefahren, und auf die Innenfläche der unteren Deckschicht 11 wird mit einer Gießvorrichtung 100 ein Reaktionsgemisch 10 aufgetragen. Die Gießvorrichtung 100 schließt sich über einen Zulaufanschluss 12 an einen Mischkopf 19 an, und in dem Mischkopf 19 werden, dargestellt mit zwei Pfeilen, wenigstens die Komponenten Polyol und Isocyanat mit einem entsprechenden Mischverhältnis eingegeben, wobei eine mögliche Luftbeladung des Reaktionsgemisches 10 vorgesehen sein kann, welche nur vereinfachend nicht dargestellt ist.

Die Gießvorrichtung 100 ist derart beabstandet zur Doppelband-Transportanlage 21 positioniert, dass über eine Aufschäumstrecke das Reaktionsgemisch so aufschäumt, dass die Unterseite der oberen Deckschicht 11 durch das Aufschäumen erreicht wird, und beim Durchlauf des so gebildeten Verbundelementes 1 durch die Doppelband-Transportanlage 21 kann der Polyurethanschaumkern zwischen den beiden Deckschichten 11 aushärten. Nach dem Durchlauf durch die Doppelband-Transportanlage 21 kann das Endlosmaterial des Verbundelementes 1 zur Bildung einzelner Sandwichplatten auf nicht näher gezeigte Weise vereinzelt werden.

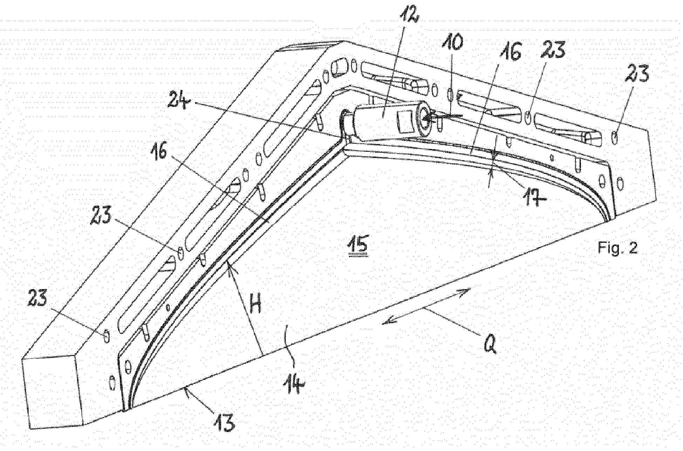

Figur 2 zeigt ein Beispiel einer Spaltplatte 14, wobei die perspektivische Darstellung derart gewählt ist, dass der Spaltraum 15 sichtbar ist, wobei die Gegen-Spaltplatte entnommen ist, um den flach ausgebildeten Spaltraum 15 darzustellen. Die gezeigte Spaltplatte 14 weist Aussparungen 23 zur Aufnahme von Befestigungsmitteln auf, sodass zwei Spaltplatten 14 aufeinander gebracht werden können, um die Gießvorrichtung 100 zu bilden und um damit den Spaltraum 15 zu vervollständigen.

Beispielhaft gezeigt ist ein Zulaufanschluss 12 zur Zuführung von Reaktionsgemisch 10, und der Zulaufanschluss 12 ist fluidisch verbunden mit einem Zulaufkanal 16, der in die Spaltplatte 14 eingebracht ist. Der Zulaufkanal 16 zweigt sich nach einem Zwischenkanal 24 zur Anbindung an den Zulaufanschluss 12 zu beiden Seiten einer Querrichtung Q ab, sodass der Zulaufkanal 16 zwei Äste aufweist, die sich seitlich vom Zulaufanschluss 12 weg erstrecken.

Damit ist lediglich beispielhaft eine symmetrische Ausbildung der Gießvorrichtung dargestellt, die alternativ auch asymmetrisch nur einseitig des Zulaufanschlusses 12 ausgebildet sein kann, sodass nur ein Ast des Zulaufkanals 16 sich an den Zulaufanschluss 12 anschließt.

Die Unterkante der Spaltplatte 14 bildet gemeinsam mit der nicht gezeigten weiteren Spaltplatte 14 einen Austrittsspalt 13. Der Austrittsspalt 13 erstreckt sich in seiner Länge über der Querrichtung Q zwischen den beiden Enden des Zulaufkanals 16, und der Zulaufkanal 16 ist so gekrümmt, dass sich dieser mit zunehmendem Abstand vom Zulaufanschluss 12 der Kante des Austrittsspaltes 13 nähert und schließlich endseitig mit diesem abschließt. Je größer also der Abstand vom Zulaufanschluss 12 ist, desto kleiner wird die Höhe des Spaltraumes 15 in Höhenrichtung H. Der Zulaufkanal 16 selbst ist als nutenartige Vertiefung in der Spaltplatte 14 eingebracht und weist einen Kanalquerschnitt 17 auf, der sich mit zunehmendem Abstand vom Zulaufanschluss 12 verjüngt.

Der sich ändernde Kanalquerschnitt 17, die Krümmung im Zulaufkanal 16 und damit die sich ändernde Höhe in Höhenrichtung H des Spaltraumes 15 sind so aufeinander abgestimmt, dass das Reaktionsgemisch 10 über der gesamten Länge des Austrittsspaltes 13 die gleiche Durchlaufzeit durch die Gießvorrichtung 100 erfährt, und die Austrittsgeschwindigkeit des Reaktionsgemisches 10 aus dem Austrittsspalt 13 ist über der Länge des gesamten Austrittsspaltes 13 ebenfalls gleich.

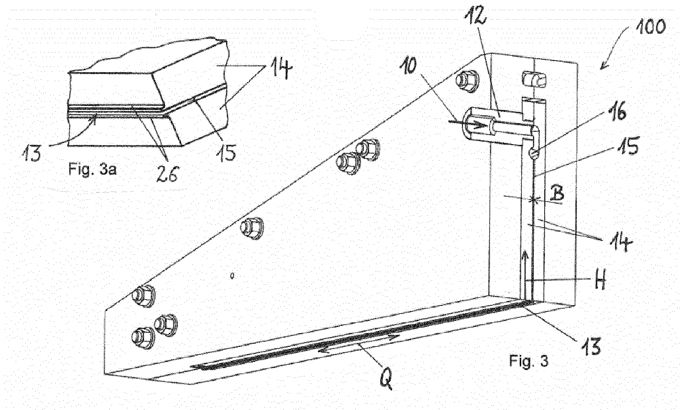

Figur 3 zeigt eine Querschnittsansicht durch die Gießvorrichtung 100 mit quergeschnittenen Spaltplatten 14. Dabei ist ein Spaltraum 15 erkennbar, der sich zwischen den beiden Spaltplatten 14 erstreckt und in Höhenrichtung H vom Zulaufkanal 16 bis zum unterseitigen Austrittsspalt 13 reicht. Der Spaltraum 15 weist über seiner flächigen Erstreckung eine konstante Breite B auf, und die flächige Erstreckung ergibt sich zwischen dem Zulaufkanal 16 und dem Austrittsspalt 13 in der Höhenrichtung H und der Querrichtung Q, auf der die Höhenrichtung H senkrecht steht.

Figur 3a zeigt eine abgewandelte Ausführungsform des Austrittsspaltes 13 mit an diesem ausgebildeten Spaltlippen 26, wobei die Spaltlippen 26 über dem Plattenende der Spaltplatten 14 hervorstehen und dünne lippenartige Vorsprünge bilden. Damit wird verhindert, dass sich im äußeren Bereich des Austrittsspaltes 13 Reaktionsgemisch ansammeln kann, welches an der Außenoberfläche der Spaltplatten 14 bei größeren angesammelten Mengen den Austritt des Reaktionsgemisches stören könnte.

Figur 4 zeigt eine perspektivische Ansicht der in dem erfindungsgemäßen Verfahren verwendeten Anlage mit einer einzelnen Gießvorrichtung 100 zum Auftragen eines aufschäumenden Reaktionsgemisches, wobei hier allerdings nur der für die Erfindung relevante Auftragsbereich vom Reaktionsgemisch 10 auf die untere Deckschicht 11 dargestellt ist. Die Deckschicht wird über die Transportrollen 33 unter der Gießvorrichtung durchgeführt, dort mit Reaktionsgemisch beaufschlagt und läuft anschließend in die Doppelband-Transportanlage 21 in Transportrichtung T ein.

Die zum Mischkopf 19 zeigende Gegen-Spaltplatte 14 wird in der Darstellung nicht gezeigt, um den flach ausgebildeten Spaltraum 15 zu zeigen. Die gezeigte Spaltplatte 14 weist Aussparungen 23 zur Aufnahme von Befestigungsmitteln auf, so dass zwei Spaltplatten 14 aufeinander gebracht werden können, um die Gießvorrichtung 100 zu bilden und um damit den Spaltraum 15 zu vervollständigen.

Über den Zulaufanschluss 12 wird das Reaktionsgemisch 10 durch einen Zwischenkanal 24 in die beiden symmetrischen Äste von dem Zulaufkanal 16 eingeleitet. In diesem Fall hat der Zulaufkanal einen kreisförmigen Querschnitt und wurde symmetrisch - jeweils mit Halbkreisquerschnitt - in beide Spaltplatten eingearbeitet. Im Bereich des Zulaufanschlusses ist der Querschnitt von dem Zulaufkanal am Größten.

Bei einem Kreisquerschnitt ist das Verhältnis der Querschnittsfläche des Kanals zu dem Umfang - üblicherweise als hydraulischer Durchmesser gekennzeichnet - minimal, was aufgrund der Wandhaftung des reaktiven Gemisches und der abnehmenden Geschwindigkeit das Zuwachsen des Verteilerkanals am Kanalende verzögert. Diesbezüglich wäre jede andere Querschnittsform und insbesondere Rechteckquerschnitte nachteiliger.

Der Spaltraum 15 wurde zur Vereinfachung der Fertigung und um die Reinigung zu erleichtern ausschließlich in die gezeigte Spaltplatte eingebracht und besitzt eine konstante Breite B über seine gesamte flächige Ausdehnung zwischen dem Zulaufkanal oben und dem Austrittsspalt 13 an der Unterkante der Spaltplatte 14. Die maximale Höhe des Spaltraumes ist in der Mitte unterhalb von dem Zulaufanschluss 12 bzw. dem Zwischenkanal 24. Der Austrittsspalt 13 erstreckt sich über der Querrichtung Q zwischen den beiden Enden des Zulaufkanals 16. Der Zulaufkanal 16 ist so gekrümmt, dass sich dieser mit zunehmendem Abstand vom Zulaufanschluss 12 der Kante des Austrittsspaltes 13 nähert und schließlich endseitig mit diesem abschließt. Am Ende gehen die Zulaufkanäle 16 in dem Ausführungsbeispiel in den Austrittsspalt über. Der Querschnitt der Kanäle wurde etwas größer als die Breite vom Spaltraum gewählt, um die Gefahr von Zuwachsen infolge der chemischen Reaktion des Gemisches zu verringern.

Der sich ändernde Querschnitt und die Krümmung im Zulaufkanal 16 und damit die sich ändernde Höhe in Höhenrichtung H des Spaltraumes 15 wurden so aufeinander abgestimmt, dass das Reaktionsgemisch 10 über der gesamten Länge des Austrittsspaltes 13 die gleiche Durchlaufzeit durch die Gießvorrichtung 100 erfährt, und die Austrittsgeschwindigkeit des Reaktionsgemisches 10 aus dem Austrittsspalt 13 ist über der Länge des gesamten Austrittsspaltes 13 ebenfalls gleich.

Wie das gezeigte Ausführungsbeispiel in Figur 4 zeigt, wird die Gießvorrichtung 100 über zwei seitliche Halter 28 an einer Gleitschiene 34 befestigt. Die Halter 28 lassen eine Kippstellung der Düse um eine Achse parallel zur Querrichtung Q zu. Über die Kippstellung kann der Winkel zwischen dem Austragsfilm und der Deckschicht 11 so eingestellt werden, dass sich optimale Strömungsverhältnisse des Reaktionsgemisches im Auftreffbereich ergeben. Die Gleitschiene 34 lässt sich auf der Traverse 32 in Querrichtung Q verschieben, um die Position von dem Austrittsspalt der Gießvorrichtung an die Position der unteren Deckschicht 11 anzupassen. Der Abstand der Traverse und damit der Abstand von dem Austrittsspalt 13 der Gießvorrichtung über der Deckschicht kann in Gravitationsrichtung g über die beiden Abstandseinstellungen 31 so gewählt werden, dass das Reaktionsgemisch auf die untere Deckschicht in gewünschter Weise und Breite aufgetragen wird. Die beiden Abstandseinstellungen 31 sind auf zwei seitlichen Führungsschienen 29, die auf dem Anlagentisch 30 befestigt sind, in Transportrichtung T der Deckschicht beweglich gelagert.

Durch Verschieben der Abstandseinstellungen 31 entlang der Führungsschienen 29 kann die Position der Gießvorrichtung 100 in Bezug zu der Doppelband-Transportanlage 21 so gewählt werden, dass entlang der in Figur 1 gezeigten Aufschäumstrecke das Reaktionsgemisch 10 die Unterseite der oberen Deckschicht 11 durch das Aufschäumen in gewünschter Weise erreicht.

**Beispiele**

Edukte:

Polyolformulierung

| | |
|---|---|
| Stepanpol PS-2352 | Polyester der Fa. Stepan mit OHZ 240 mg KOH/g auf Basis von Diethylenglykol und Phthalsäureanhydrid, Funktionalität 2, Säurezahl1,0 |
| Levagard PP | Tris-2-chlorpropylphosphat (Lanxess) |

| Tegostab B 8421 | Stabilisator mit Polydimethylsiloxan und Polyoxyalkylen-Strukturelementen (Evonik) |
|---|---|
| Wasser Desmorapid 1792 | Zubereitung aus 25 Gew% Kaliumacetat und 75 Gew% Diethylenglykol (Covestro) |
| Desmorapid 726b | Dimethylcyclohexylamin (Covestro) |
| Solstice LBA | Trans- 1-chloro-3,3,3-trifluoropropen (Honeywell) |
| c-/i-Pentan 30/70 | Mischung aus 30 Gew.-% cyclo-Pentan und 70 Gew,-% iso-Pentan, Julius Hoesch Düren GmbH & Co KG |
| Isopentan | 2-Methylbutan (Julius Hoesch Düren GmbH & Co KG) |

Isocyanat

| Desmodur 44V70L | Polymeres MDI mit einer Viskosität 600-750 mPas und einem NCO-Gehalt zwischen 30,5 und 32 Gew.-% |
|---|---|

Bestimmung der Eigenschaften:

Startzeit: Zeitpunkt charakterisiert durch den Beginn des Aufschäumens der Reaktionsmischung, (visuelle Beurteilung)

Abbindezeit: Die Abbindezeit wird ermittelt, indem man ein Holzstäbchen in das Polyurethanreaktionsgemisch eintaucht und wieder herausnimmt. Sie charakterisiert den Zeitpunkt, gemessen ab Zeitpunkt der Vermischung der Reaktionskomponenten, ab dem sich die das Gemisch verhärtet. Zu diesem Zeitpunkt lassen sich erstmalig Fäden zwischen Holzstab und Reaktionsgemisch ziehen.

Herstellung und Beurteilung der Verbundelemente:

In den Beispielen 1, 2 und 5 wurde eine Doppeltransportbandanlage (DTB) mit einem konventionellen feststehenden Auftragssystem (feststehende Gießharke vom Typ FPR 25.1-0 der Fa. Covestro, optimiert für Austragsmengen zwischen 20 und 30 kg/min und eine Panelbreite von 1000 mm) verwendet.

In den erfindungsgemäßen Beispielen 3, 4 und 6 wurde als Auftragsvorrichtung eine erfindungsgemäße Gießvorrichtung gemäß Figur 4 verwendet. Die Länge des Spaltes betrug 100 cm und der Abstand zwischen Spalt und unterer Deckschicht wurde so eingestellt, dass sich eine optimale Bedeckung der unteren Deckschicht ergibt.

Es wurden 80 mm dicke Sandwichelemente mit beidseits 0,05 mm dicker Aluminiumfolie "Aluminiumfolie HYDRO1200-N, lackiert, EP" des Herstellers Hydro Aluminium Rolled Products GmbH als Deckschichten nach dem Doppelbandverfahren hergestellt. Die Polyolformulierung enthaltend alle Komponenten mit Ausnahme des Isocyanats und das Isocyanat wurden unter 140 bar in einem Geradeausmischkopf miteinander vermischt. Das Reaktionsgemisch wurde über einen Verbindungsschlauch vom Mischkopf zur jeweiligen Austragsvorrichtung geleitet. Die Zuführung des fließfähigen Ausgangsmaterials (bei den Beispielen 1 - 4 mit 25°C, bei den Beispielen 5 und 6 mit 23°C) erfolgte mittig.

Zur Beurteilung der Schaumoberfläche wird die Deckschicht entfernt und die Oberfläche der Platte visuell begutachtet. Ein "+" bedeutet, dass der Schaum keine Lunker oder Blasen aufweist und homogen ist. Ein "-" bedeutet, dass Zusammenflusszonen, in denen die Zellen eine gröbere Struktur aufweisen, deutlich sichtbar sind.

Die Beurteilung der Haftung erfolgte qualitativ durch manuelles Abziehen der Deckschicht. Dabei bedeutet die Benotung "1" eine sehr gute Haftung, "2+" eine fast noch sehr gute Haftung usw., nahezu keine Haftung wird mit der Benotung "6" beschrieben.

Die Beurteilung der Brandeigenschaften (Kantenbeflammung Schaum) erfolgte nach EN ISO 11925-2:2010 (Deutsche Fassung).

Tabelle 1 fasst die eingesetzten Mengen (in Gew.-%), Parameter der Beispiele und Beurteilung der hergestellten Verbundelemente zusammen.

Tabelle 1:

| Beispiel | | 1 | 2 | 3 | 4 | 5 | 6 |
|---|---|---|---|---|---|---|---|
| Stepanpol PS-2352 | | 23,44 | 23,39 | 23,44 | 23,39 | 22,39 | 22,39 |
| Levagard PP | | 4,51 | 4,50 | 4,51 | 4,50 | 4,31 | 4,31 |
| Tegostab B 8421 | | 0,60 | 0,60 | 0,60 | 0,60 | 0,57 | 0,57 |
| Wasser | | 0,36 | 0,36 | 0,36 | 0,36 | 0,34 | 0,34 |

(fortgesetzt)

| Beispiel | | 1 | 2 | 3 | 4 | 5 | 6 |
|---|---|---|---|---|---|---|---|
| Desmorapid 1792 | | 0,81 | 0,96 | 0,81 | 0,96 | 0,78 | 0,78 |
| Desmorapid 726b | | 0,21 | 0,30 | 0,21 | 0,30 | 0,20 | 0,20 |
| Desmodur 44V70L | | 65,10 | 64,95 | 65,10 | 64,95 | 62,18 | 62,18 |
| Solstice LBA | | | | | | 9,23 | 9,23 |
| c-/i-Pentan 30/70 | | 4,96 | 4,95 | 4,96 | 4,95 | | |
| Isocyanat-Index | | 313 | 313 | 313 | 313 | 313 | 313 |
| Startzeit | s | 6 | 3 | 5 | 3 | 5 | 5 |
| Abbindezeit | s | 31 | 19 | 28 | 21 | 30 | 31 |
| Kantenbeflammung Schaum | mm | 148 | 147 | | | 103 | |
| Aussehen Schaum Oberseite | | + | - | + | + | - | + |
| Haftung nach 24h Oberseite | | 2+ | 2+ | 2+ | 2 | 2+ | 2+ |
| Haftung nach 24h Unterseite | | 2 | 2 | 2 | 1 | 3 | 2 |
| Bandgeschwindigkeit (ist) | [m/min] | 7,1 | 10,75 | 7,6 | 10,6 | 7,13 | 7,8 |
| Gesamtaustrag | [kg/min] | 19,20 | 28,80 | 19,20 | 28,80 | 19,20 | 19,20 |
| Luftbeladung | [Normliter /min] | 1 | 1 | 3 | 3 | 1 | 3 |

## Bezugszeichenliste

| | | | | | |
|---|---|---|---|---|---|
| 100 | Gießvorrichtung | | | | |
| 1 | Verbundelement | | | | |
| 10 | Reaktionsgemisch | 20 | Deckschichtrolle | 30 | Anlagentisch |
| 11 | Deckschicht | 21 | Doppelband-Transportanlage | 31 | Abstandseinstellung |
| 12 | Zulaufanschluss | | | 32 | Traverse |
| 13 | Austrittsspalt | 23 | Aussparung | 33 | Transportrollen |
| 14 | Spaltplatte | 24 | Zwischenkanal | 34 | Gleitschiene |
| 15 | Spaltraum | 26 | Spaltlippe | Q | Querrichtung |
| 16 | Zulaufkanal | 28 | Kippwinkelverstellung | H | Höhenrichtung |
| 17 | Kanalquerschnitt | 29 | Führungsschiene | B | Breite |
| 19 | Mischkopf | | | T | Transportrichtung |
| | | | | g | Gravitationsrichtung |

## Patentansprüche

1.  Verfahren zur Herstellung von Polyurethan (PUR) und Polyurethan/Polyisocyanurat (PUR/PIR) - Hartschaumstoffen, umfassend die Schritte

    i) Herstellen eines Reaktionsgemisches enthaltend die Komponenten

    A) eine Isocyanat-reaktive Komponente enthaltend mindestens ein Polyol ausgewählt aus der Gruppe bestehend aus Polyetherpolyolen, Polyesterpolyolen, Polycarbonatpolyolen, Polyether-Polycarbonatpolyolen und Polyetheresterpolyolen,
    B) eine Polyisocyanatkomponente und
    C) ein Treibmittel
    D) optional eine Katalysatorkomponente
    E) optional Hilfs- und Zusatzstoffe

ii) Auftragen des Reaktionsgemisches mit einer Anlage umfassend mindestens eine Gießvorrichtung (100), **dadurch gekennzeichnet, dass** die mindestens eine Gießvorrichtung (100) aufweist:

- einen Zulaufanschluss (12) zur Einspeisung des Reaktionsgemisches (10),
- wenigstens einen sich in einer Querrichtung (Q) erstreckenden Austrittsspalt (13) zum Austritt des Reaktionsgemisches (10),
- zwei sich gegenüberliegend angeordnete Spaltplatten (14), wobei sich in einer Höhenrichtung (H) über dem Austrittsspalt (13) ein Spaltraum (15) zwischen den Spaltplatten (14) erstreckt, und
- einen mit dem Zulaufanschluss (12) verbundener Zulaufkanal (16), der zwischen den Spaltplatten (14) ausgebildet ist und den Spaltraum (15) über dem Austrittsspalt (13) in Höhenrichtung (H) abschließt, wobei der Zulaufkanal (16) einen Kanalquerschnitt (17) aufweist, dessen Hauptabmaß größer ist als die Breite (B) des Spaltraumes (15), sodass das Reaktionsgemisch über der Länge des Zulaufkanals (16) verteilt in den Spaltraum (15) einleitbar ist.

2. Verfahren gemäß Anspruch 1, wobei dieses kontinuierlich durchgeführt wird.

3. Verfahren gemäß Anspruch 1, wobei die mindestens eine Gießvorrichtung (100) weiterhin **dadurch gekennzeichnet ist, dass** der Kanalquerschnitt (17) mit zunehmendem Abstand vom Zulaufanschluss (12) kleiner werdend ausgebildet ist.

4. Verfahren gemäß einem der vorangehenden Ansprüche, wobei die mindestens eine Gießvorrichtung (100) mit einem austauschbaren Einleger aus Kunststoff, Metall oder einem anderen Material versehen ist, welcher die Spaltplatten (14) der Gießvorrichtung (100) innenseitig vor Verunreinigung schützt.

5. Verfahren gemäß Anspruch 1, **dadurch gekennzeichnet, dass** die Anlage auf wenigstens einer Teilbreite einer Deckschicht (11), insbesondere zur Herstellung eines Verbundelementes (1), mehrere Gießvorrichtungen (100) aufweist, wobei die Austrittsspalte (13) der Gießvorrichtungen (100) sich in einer gemeinsamen Querrichtung (Q) oder über einem Bogen über der Deckschicht (11) erstrecken.

6. Verfahren gemäß einem der vorangehenden Ansprüche, **dadurch gekennzeichnet, dass** jede einzelne in der Anlage verwendete Gießvorrichtung (100) oder auch die gesamte Anlage so ausgeführt sind, dass ihr Abstand zu der unteren Deckschicht während des Auftragen des Reaktionsgemisches variiert werden kann.

7. Verfahren gemäß einem der Ansprüche 1-5, **dadurch gekennzeichnet, dass** die Isocyanat-reaktive Komponente A), jeweils bezogen auf das Gesamtgewicht aus der Isocyanat-reaktiven Komponente A), der Katalysatorkomponente D) und den Hilfs- und Zusatzstoffen E), enthält:

a) 65 bis 100 Gew.-% der Basis-Polyolkomponente ausgewählt aus der Gruppe bestehend aus Polyesterpolyol, Polyetherpolyol, Polyetheresterpolyol, Polycarbonatpolyol und/oder Polyether-Polycarbonatpolyol in einem Hydroxylzahlbereich zwischen 100 bis 300 mg KOH/g und mit Funktionalitäten von $\geq 1,2$ bis $\leq 3,5$, und
b) 0 bis 25 Gew.-% langkettige Polyetherpolyole mit Funktionalitäten von $\geq 1,2$ bis $\leq 3,5$ und einer Hydroxylzahl zwischen 10 und 100 mg KOH/g, und
c) 0 bis 10 Gew.-% niedermolekulare Isocyanat-reaktive Verbindungen mit einer Molmasse $M_n$ kleiner als 400 g/mol, und
d) 0 bis 10 Gew.-% mittelkettige Polyetherpolyole mit Funktionalitäten von $\geq 2$ bis $\leq 6$ und einer Hydroxylzahl zwischen 300 und 700 mg KOH/g.

8. Verfahren gemäß einem der Ansprüche 1-5, **dadurch gekennzeichnet, dass** die Isocyanat-reaktive Komponente A), bezogen auf das Gesamtgewicht aus der Isocyanat-reaktiven Komponente A), der Katalysatorkomponente D) und den Hilfs- und Zusatzstoffen E), enthält:

a) 65 - 100 Gew.-% mindestens ein Polyesterpolyol mit einer Funktionalität von Funktionalitäten von $\geq 1,2$ bis $\leq 3,5$, und einer Hydroxylzahl von Zahl von 100 bis 300 mg KOH/g, sowie einer Säurezahl von 0 bis 5,0 mg KOH/g in einer Menge von; und
b) 0 bis 10 Gew.-% ein Polyetherpolyol mit einer Funktionalität von $\geq 1,8$ bis $\leq 3,5$ und einer Hydroxylzahl von 10 bis 100 mg KOH/g

9. Verfahren gemäß einem der vorangehenden Ansprüche, **dadurch gekennzeichnet, dass** die Katalysatorkomponente D) einen aminischen Katalysator D1) und ein Carboxylat D2) enthält und das Mengenverhältnis von D2/D1 zwischen 0,1 und 80 liegt, insbesondere zwischen 2 und 20.

10. Verfahren gemäß einem der vorangehenden Ansprüche, **dadurch gekennzeichnet, dass** die Startzeit des Reaktionsgemisches < 5s ist.

11. Verfahren gemäß einem der vorangehenden Ansprüche, **dadurch gekennzeichnet, dass** die Abbindezeit des Reaktionsgemisches < 25s ist.

12. Verfahren gemäß einem der vorangehenden Ansprüche, **dadurch gekennzeichnet dass** das Treibmittel C) ein physikalisches Treibmittel ausgewählt ist aus einer oder mehreren Verbindungen aus der Gruppe enthaltend Kohlenwasserstoffe, halogenierten Ethern und (per)fluorierte Kohlenwasserstoffe, insbesondere Pentanisomere und/oder (hydro)fluorierte Olefine.

13. Verfahren gemäß einem der vorangehenden Ansprüche, **dadurch gekennzeichnet, dass** in Schritt ii) ein schäumendes Gemisch aufgetragen wird.

14. PUR-Hartschaum oder PUR/PIR-Hartschaum, hergestellt mit einem Verfahren gemäß einem der Ansprüche 1 - 13.

15. Verbundelemente, enthaltend eine oder zwei Deckschichten und einen PUR - oder PUR/PIR-Hartschaum gemäß Anspruch 14.

Fig. 1

Fig. 2

Fig. 3a

Fig. 3

Fig. 4

Europäisches
Patentamt

European
Patent Office

Office européen
des brevets

**EUROPÄISCHER RECHERCHENBERICHT**

Nummer der Anmeldung

EP 17 15 4063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 208 599 A1 (AFROS SPA [IT]) 21. Juli 2010 (2010-07-21) * Anspruch 1; Abbildung 19 * ----- | 1-13 | INV. C08G18/76 B29C44/32 B29C44/46 C08G18/18 C08G18/22 C08G18/42 |
| X | US 2014/017412 A1 (SCHOEN LARS [DE] ET AL) 16. Januar 2014 (2014-01-16) * Absätze [0085] - [0096]; Tabelle 1 * ----- | 14,15 | |
| X | US 2014/162006 A1 (ALBERS REINHARD [DE] ET AL) 12. Juni 2014 (2014-06-12) * Absätze [0087] - [0089]; Beispiele 1,2 * ----- | 14,15 | |
| X | US 2011/201716 A1 (GEHINGER LIONEL [FR] ET AL) 18. August 2011 (2011-08-18) * Absätze [0119] - [0121] * * Beispiel 8; Tabelle 5 * ----- | 14,15 | |
| X | US 2013/183880 A1 (PIRKL HANS-GEORG [DE] ET AL) 18. Juli 2013 (2013-07-18) * Beispiel 3 * ----- | 14,15 | |

RECHERCHIERTE
SACHGEBIETE (IPC)

C08G
B29C

Der vorliegende Recherchenbericht wurde für alle Patentansprüche erstellt

| Recherchenort | Abschlußdatum der Recherche | Prüfer |
|---|---|---|
| München | 24. Juli 2017 | Bergmeier, Martin |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 15 4063

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2017

| Im Recherchenbericht angeführtes Patentdokument | Datum der Veröffentlichung | Mitglied(er) der Patentfamilie | Datum der Veröffentlichung |
|---|---|---|---|
| EP 2208599 A1 | 21-07-2010 | KEINE | |
| US 2014017412 A1 | 16-01-2014 | AU 2008337524 A1 | 25-06-2009 |
| | | BR PI0820852 A2 | 16-06-2015 |
| | | CA 2707500 A1 | 25-06-2009 |
| | | CN 101903113 A | 01-12-2010 |
| | | CY 1117119 T1 | 05-04-2017 |
| | | EP 2234732 A2 | 06-10-2010 |
| | | EP 2735375 A1 | 28-05-2014 |
| | | EP 2737956 A1 | 04-06-2014 |
| | | ES 2554134 T3 | 16-12-2015 |
| | | HR P20151360 T1 | 15-01-2016 |
| | | HU E026898 T2 | 29-08-2016 |
| | | KR 20100098669 A | 08-09-2010 |
| | | MX 343958 B | 30-11-2016 |
| | | PT 2234732 E | 21-12-2015 |
| | | RU 2010129469 A | 27-01-2012 |
| | | SI 2234732 T1 | 29-01-2016 |
| | | US 2011003082 A1 | 06-01-2011 |
| | | US 2014017412 A1 | 16-01-2014 |
| | | WO 2009077490 A2 | 25-06-2009 |
| US 2014162006 A1 | 12-06-2014 | CN 103649148 A | 19-03-2014 |
| | | DE 102011079336 A1 | 24-01-2013 |
| | | EP 2734564 A1 | 28-05-2014 |
| | | RU 2014105649 A | 27-08-2015 |
| | | US 2014162006 A1 | 12-06-2014 |
| | | WO 2013010988 A1 | 24-01-2013 |
| US 2011201716 A1 | 18-08-2011 | BR PI0920168 A2 | 29-12-2015 |
| | | CA 2739845 A1 | 22-04-2010 |
| | | CN 102245668 A | 16-11-2011 |
| | | EP 2340269 A2 | 06-07-2011 |
| | | ES 2391811 T3 | 30-11-2012 |
| | | HR P20120999 T1 | 31-12-2012 |
| | | JP 5735920 B2 | 17-06-2015 |
| | | JP 2012505941 A | 08-03-2012 |
| | | KR 20110090930 A | 10-08-2011 |
| | | PT 2340269 E | 05-12-2012 |
| | | SI 2340269 T1 | 31-01-2013 |
| | | US 2011201716 A1 | 18-08-2011 |
| | | WO 2010043624 A2 | 22-04-2010 |
| US 2013183880 A1 | 18-07-2013 | BR 112013000749 A2 | 31-05-2016 |
| | | CA 2805017 A1 | 19-01-2012 |
| | | CN 103003323 A | 27-03-2013 |

EPO FORM P0461

Für nähere Einzelheiten zu diesem Anhang : siehe Amtsblatt des Europäischen Patentamts, Nr.12/82

Seite 1 von 2

**EP 3 354 671 A1**

**ANHANG ZUM EUROPÄISCHEN RECHERCHENBERICHT**
**ÜBER DIE EUROPÄISCHE PATENTANMELDUNG NR.**

EP 17 15 4063

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2017

| Im Recherchenbericht angeführtes Patentdokument | Datum der Veröffentlichung | Mitglied(er) der Patentfamilie | | Datum der Veröffentlichung |
|---|---|---|---|---|
| | | EP | 2593491 A1 | 22-05-2013 |
| | | JP | 5864567 B2 | 17-02-2016 |
| | | JP | 2013533917 A | 29-08-2013 |
| | | RU | 2013105804 A | 20-08-2014 |
| | | US | 2013183880 A1 | 18-07-2013 |
| | | WO | 2012007418 A1 | 19-01-2012 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2216156 A1
- EP 0683027 A
- GB 1282876 A
- EP 2208599 A1
- EP 2910585 A
- EP 1359177 A
- WO 2010043624 A
- EP 1923417 A
- EP 2016068574 W

**In der Beschreibung aufgeführte Nicht-Patentliteratur**

- Chemistry and Technology of Polyols for Polyurethanes. Rapra Technology Limited. 2005
- Oligo-Polyols for Elastic Polyurethanes. 55 ff
- Polyester Polyols for Elastic Polyurethanes. 263 ff
- Polyether Polyols for Rigid Polyurethane Foams. 321 ff
- Polyester Polyols for Rigid Polyurethane Foams. 419 ff